# EUROPEAN PATENT SPECIFICATION

(11) **EP 1 124 355 B1**
(45) Date of publication and mention of the grant of the patent: **26.03.2008**
(21) Application number: 01301143.2
(22) Date of filing: 09.02.2001
(51) Int. Cl.: H04L 12/46, H04Q 11/04, H04J 3/16

(54) **10 Gigabit ethernet mappings for a common lan/wan pmd interface**
10 Gigabit Ethernet-Darstellung für eine gemeinsamen LAN/WAN PMD Schnitstelle
Mappage de 10 Gigabit-Ethernet pour une interface commune DMP LAN/WAN

(30) Priority: 09.02.2000 CA 2298732; 19.12.2000 US 739385
(43) Date of publication of application: 16.08.2001
(73) Proprietor: Nortel Networks Limited, St Laurent, Québec H4S 2A9 (CA)
(72) Inventor: Bottorff, Paul A., Palo Alto, California 94306 (US); Martin, David W., Stittsville, Ontario K2S 1R1 (CA); Figueira, Norival R., San José, California 95129 (US); Armstrong, Timothy J., Stittsville, Ontario K2S 1J8 (CA); Raahemi, Bijan, Nepean, Ontario K2E 7B4 (CA)
(74) Representative: Ertl, Nicholas Justin

(56) References cited:
- WO-A-98/04072
- CN-A- 1 250 294
- US-A- 5 841 776
- HOWARD FRAZIER - CISCO SYSTEMS, INC: "Unified LAN/WAN PHY Proposal" IEEE P802.3 HIGHER SPEED STUDY GROUP, [Online] 18 January 2000 (2000-01-18), XP002341559 Dallas, US Retrieved from the Internet: URL:http://grouper.ieee.org/groups/802/3/1 0G_study/public/jan00/frazier_1_0100.pdf> [retrieved on 2005-08-19]

## Description

### TECHNICAL FIELD

The present invention relates to high-speed data communications networks, and in particular to a method and apparatus for interfacing adjacent high-speed data communications networks.

### BACKGROUND OF THE INVENTION

Applicant's co-pending Canadian Patent Application CA 2273522 proposes a technique of mapping high speed (HS) Ethernet frames (e.g. originating in a local area network [LAN] using a fiber distributed data interface [FDDI] physical layer) into a synchronous container (e.g. thin synchronous optical network [SONET] STS-192C or synchronous digital hierarchy [SDH] VC-4-64C frames) for transport across a synchronous packet switched network fabric at a standard OC-192 line rate of 9.95328 Gbaud, to achieve a data rate of 9.5864Gb/s. This data rate is obtained independently of the LAN/MAN/WAN configuration of the network. The use of standard line rates in all configurations means that a common physical medium dependent (PMD) interface can be used, which reduces costs by permitting increased economies of scale. Additionally, conventional SONET/SDH routing systems (e.g. routers, cross-connects and add-drop multiplexors) can be used to transport data traffic in all configurations. Despite its versatility, the technique of Canadian Patent Application CA2273522 is unattractive for use in LAN configurations, because HS Ethernet LANs commonly provide a data rate of 10Gb/s. As a result, implementation of this technique in LAN configurations would have the effect of degrading overall data performance.

An alternative protocol has recently been proposed for mapping HS Ethernet frames into synchronous containers, that is intended to achieve a data rate of 10Gb/s for LAN configurations. However, in order to obtain this data rate, the synchronous container must be transmitted at an accelerated line rate of 10.3125 Gbaud. This non-standard line rate means that conventional SONET/SDH routing systems cannot readily be used in LAN configurations. Furthermore, the use of an accelerated line rate reduces data transmission reliability. According to this proposal, the standard OC-192 line rate of 9.95328 Gbaud is used for WAN configurations. However, the use of different line rates for LAN and WAN configurations means that respective different PMD interface devices must be used for each configuration. This latter requirement increases costs by reducing economies of scale.

Accordingly, a method and apparatus of mapping high-speed (HS) Ethernet signals to a synchronous container for transport across a synchronous packet-switched network fabric, which enables an Ethernet data rate of 10Gb/ s in LAN configurations of the network, while using a standard OC-192 line rate of 9.95328 Gbaud, remains highly desirable.

A proposal by the Higher Speed Study Group of Cisco Systems Inc, provides a PHY architecture which is suitable for serial transmission on both LAN operating at 10Gb/s and WAN compatible with OC-192c/SDH VC-4-64c. The proposal uses a Busy Idle rate control. In a WAN configuration however, the data transfer between the MAC and the PCS/PMA is 9.29419 which is lower than a conventional SONET/SDH signal.

### SUMMARY OF THE INVENTION

A main object of the present invention is to overcome the above-noted deficiencies in the prior art.

Thus an object of the present invention is to provide a method and apparatus for mapping Ethernet frames to a synchronous container such that an Ethernet data rate of 10Gb/s in LAN configurations can be obtained at a standard line rate of 9.95328 Gbaud.

Another object of the present invention is to provide a method and apparatus for mapping Ethernet frames to a synchronous container such that a common physical medium dependent (PMD) interface can be used independently of a LAN/WAN configuration of the network.

These objects are met by the features defined in the main claims. Further optional features of preferred embodiments of the invention are defined in the sub-claims.

Accordingly, an aspect of the present invention provides a method of transporting a high speed Ethernet data stream comprising a sequential series of media access control, MAC, frames and having a data rate of 10Gb/s across a synchronous packet switched network fabric having a line rate of 9.953280 Gbaud, wherein:
the high-speed Ethernet data stream is compressed, at a sending interface, to produce a compressed data stream;
the compressed data stream is mapped to a synchronous container having a line/column frame format conforming to a conventional synchronous optical network, SONET, frame format and a stripped transport overhead, TOH, wherein the stripped TOH comprises only A1 and A2 octets of a conventional SONET frame TOH; and
the synchronous container is launched across the network fabric toward a receiving interface.

A further aspect of the present invention provides a method of interfacing a local area network (LAN) having a 10Gb/s data rate and a synchronous packet switched physical network fabric having a line rate of 9.953280 Gbaud. The method comprises the use of the transporting method of the invention.

Another aspect of the present invention provides an interface for coupling a local area network, LAN, having a 10Gb/s data rate to a synchronous packet switched physical network fabric having a line rate of 9.953280 Gbaud, wherein the interface comprises:
means for receiving an Ethernet data stream comprising a sequential series of media access control, MAC, frames;
means for compressing the Ethernet data stream; and
means for mapping the compressed Ethernet data stream to a synchronous container of the synchronous packet switched physical network fabric, the synchronous container having a line/column frame format conforming to a conventional synchronous optical network, SONET, frame format and a stripped transport overhead, TOH, wherein the stripped TOH comprises only A1 and A2 octets of a conventional SONET frame TOH.

In embodiments of the invention, the synchronous container comprises: a line/column frame format conforming to a conventional synchronous optical network (SONET) frame format; and a stripped transport overhead (TOH). The frame format of the synchronous container may conform to a SONET synchronous transport signal-level 192 (STS-192) frame format. The stripped TOH may comprise only A1 and A2 octets of a conventional SONET frame TOH. In such cases, the stripped TOH preferably comprises a predetermined number (e.g. at most 24) of each of the A1 and A2 octets.

In embodiments of the invention, the step of compressing the Ethernet data stream comprises removing an inter-frame gap (IFG) between successive MAC frames. Idle MAC frames may also be removed from the Ethernet data stream.

The compressed data stream may be mapped to the synchronous container by adding successive frames of the compressed data stream directly to the SONET/SDH frame. In such cases, successive MAC frames of the compressed data stream are preferably added to the synchronous container starting immediately following the stripped TOH.

In some embodiments of the invention, the synchronous container may be launched into the network fabric by inverse multiplexing the synchronous container into a plurality of data streams, which are then launched into a respective plurality channels of the network fabric. In such cases, receiving the synchronous container includes receiving a respective data stream through each one of the plurality of channels. The received data streams are then aligned, and multiplexed to recover the synchronous container.

In embodiments of the invention, the compressed data stream is extracted from the synchronous container by: synchronizing a read clock with the synchronous container; and reading successive MAC frames of the compressed data stream from the synchronous container starting immediately following the stripped TOH. The read clock can be synchronized with the synchronous container by detecting a transition between the A1 and A2 octets.

The compressed data stream may be decompressed by inserting an inter-frame gap (IFG) between successive MAC frames. Insertion of an IFG between successive MAC frames may be accomplished by: monitoring a preamble portion of a first MAC frame; reading a length of a data portion of the first MAC frame from the monitored preamble portion, to identify a trailing byte of the first MAC frame; and inserting an idle MAC frame into the compressed stream immediately following the identified trailing byte.

An advantage of the present invention is that a common physical medium dependent (PMD) interface can be used, independently of the LAN/MAN/WAN configuration of the network, while ensuring a reliable 10Gb/s data rate in the LAN configuration.

### BRIEF DESCRIPTION OF THE DRAWINGS

Further features and advantages of the present invention will become apparent from the following detailed description, taken in combination with the appended drawings, in which:
Fig. 1. is a block diagram illustrating a communications network including a pair of network nodes connected by a network medium, in which the present invention may be deployed;
Fig. 2 is a block diagram schematically illustrating a prior art physical layer interface;
Fig, 3 is a block diagram schematically illustrating a physical layer interface in accordance with an embodiment of the present invention;
Fig. 4 schematically illustrates encapsulation of Ethernet data streams in a synchronous container for transport through a WAN configured physical network fabric in accordance with an embodiment of the present invention;
Fig. 5 schematically illustrates encapsulation of Ethernet data streams in a synchronous container for transportation through a LAN configuration physical network fabric in accordance with an embodiment of the present invention;
Figs. 6a and 6b schematically illustrate compression and decompression of Ethernet data streams usable in conjunction with the embodiment of Fig. 5;
Fig. 7 is a table showing a comparison between data and line rates obtained using the prior art interface of Fig. 2 and the present invention; and
Fig. 8 is a block diagram schematically illustrating a physical layer interface in accordance with an alternative embodiment of the present invention.

It will be noted that throughout the appended drawings, like features are identified by like reference numerals.

### DETAILED DESCRIPTION OF THE PREFERRED EMBODIMENT

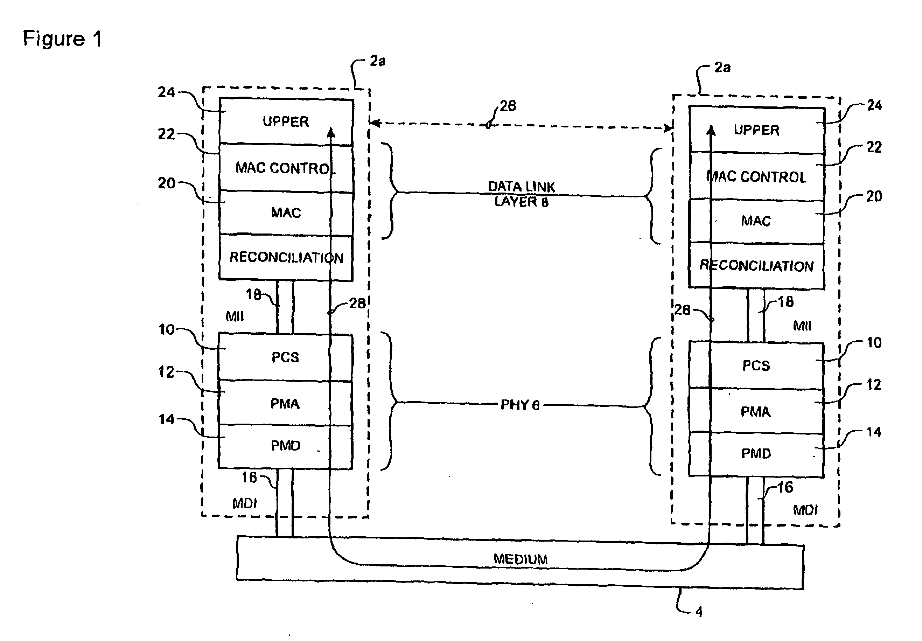

Fig. 1 illustrates a communications network including a pair of nodes 2a,2b (such as personal computers and LAN servers) connected for data communications through a network medium 4. The nodes 2a,2b are represented by the standard Ethernet reference model which utilizes a multi-layer architecture made up of a physical layer (PHY) 6 and a data link layer 8. The PHY 6 is divided into three sub-layers, namely a physical coding sub-layer (PCS) 10, a physical medium attachment (PMA) sub-layer 12, and a physical medium dependent (PMD) sub-layer 14.' A Medium Dependent Interface (MDI) 16 couples the PHY 6 to the medium 4 (i.e. the network fabric). A Medium Independent Interface (MII) 18 couples the PHY 6 to the data link layer 8, which is composed of Media Access Control (MAC) 20 and (optionally) MAC control 22 sub-layers. Upper layers 24 containing, for example, end-user software applications (not shown) are coupled to the data link layer 8 to facilitate communications between each node 2. This reference model renders the PHY 6 and medium 4 effectively transparent to upper-layer software applications, which are therefore enabled to communicate with each other using a common communications protocol that is independent of the medium 4. In Fig. 1, this is illustrated by a dashed line indicating a direct virtual connection 26 between applications in the upper layer 24. The actual flow of data between the upper layer applications follows a path 28 extending from the upper layer 24 of one node 2a, down through the data link layer 8 and PHY 6 of the device 2a, through the medium 4, and upwards through the PHY 6 and data link layer of the other node 2b.

In general, the medium 4 provides the network fabric, including physical links (not shown) and switching (and or routing) systems (not shown) which enable the physical transport of data between nodes 2a,2b connected to the network. The medium 4 may be configured as a wide area network (WAN) or a local area network (LAN), and may use any one of a variety of physical transport technologies (e.g. fiber-optics, copper, or twisted pair) and protocols (such as synchronous optical network [SONET], synchronous digital hierarchy [SDH], and Fiber Distributed Data Interface [FDDI]).

Local area networks (LANs) are commonly employed to connect general purpose computers (e.g. hosts or clients) and special purpose computers (e.g. servers) to provide communal file storage and access, e-mail services, etc. The oldest and best known LAN technology is the Ethernet, which in many cases operates on a fiber distributed data interface (FDDI) PHY 6 using a common bus optical fiber medium 4.

A wide area network (WAN) is typically a packet switched data network that connects various packet switching nodes (e.g. routers, cross-connects and add-drop multiplexors) and transmission facilities to end-user communications devices (e.g. concentrator access switches or service provider routers). A WAN differs from a LAN in geographic coverage, data rates, and also in data transport technology. In the current network space, a popular WAN technology is based on the SONET/SDH protocol using an optical fiber medium configured for Wave Division Multiplex (WDM) or Dense Wave Division Multiplex (DWDM) data transport.

A metropolitan area network (MAN) is generally intended to serve network requirements that are geographically larger than a LAN, and smaller than a WAN. For example, a MAN may be used to provide a high band-width backbone interconnecting distributed LANs. This type of application is typical of campus networks, where semi-autonomous LANs in multiple buildings are interconnected by a MAN to facilitate inter-building communications. In view of increasing complexity of communications requirements, MANs are tending to evolve toward the adoption of WAN technology (e.g. SONET/SDH over DWDM optical fiber medium). Accordingly, for the purposes of the present application, MANs are considered to be a subset of WANs, and references to WANs herein should be understood to also refer to MANs.

The desirability of using a packet switched routing technology (e.g. SONET/SDH over WDM or DWDM optical fiber medium) as the medium 4 for both LAN and WAN network configurations is well recognized. However, in a high speed data network environment, achievement of this goal is complicated by the fact that high speed Ethernet LANs typically achieve a 10Gb/s data rate (in the data link layer 8 and upper layer 24), whereas the packet switched data network operating under the SONET/SDH protocol uses an OC-192 line rate of 9.95328 Gbaud to obtain a payload data rate of 9.58464 Gb/s. In order to carry Ethernet traffic across a packet switched network medium, it is necessary to resolve this difference between the Ethernet data rate in the data link layer 8 and the payload rate within the medium 4.

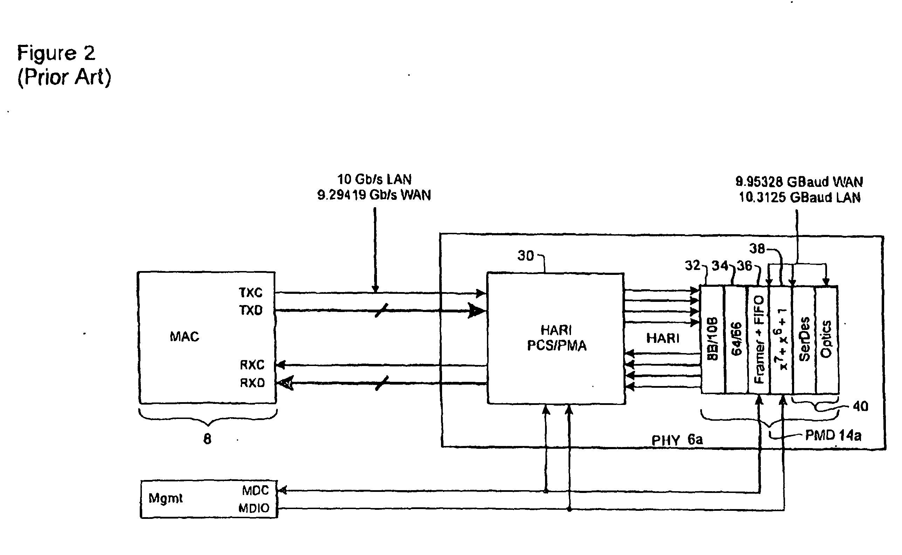

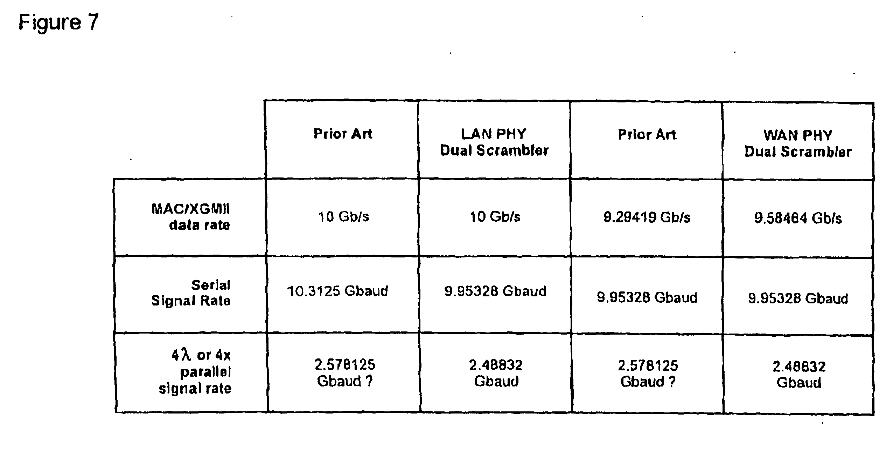

Fig. 2 schematically shows a prior art physical layer interface for coupling high speed Ethernet traffic to a SONET/SDH packet switched network medium 4. As shown in Fig. 2, the conventional PCS 10 and PMA 12 are grouped together as a combined PCS/PMA HARI 30 which mediates data transport between the (conventional) data link layer 8 and a modified PMD sub-layer 14a. The HARI 30 exchanges data with the modified PMD 14a using 4 parallel data channels (in each direction) operating at a line rate of 3.125 Gbaud. The modified PMD 14a is subdivided into 8B/10B and 64/66 encoding layers 32,34; a framer FIFO 36; a scrambler 38; and a conventional electron/optical conversion layer 40. Thus in the prior art device of Fig. 2, much of the data encoding, framing, and scrambling functionality conventionally performed in the PCS 10 and PMA 12 are relocated into the PMD 14a. The PMD 14a is designed to operate in one of two modes depending on the LAN/WAN configuration of the network (see Fig. 7). In particular, in a LAN configuration, this interface is intended to achieve a data rate in the data link layer 8 of 10Gb/s, in conformance with the high speed Ethernet standard. In order to obtain this data rate, the framer FIFO 36, scrambler 38 and converter 40 of the PMD 14a (and medium 4) is operated at a line rate of 10.3125 Gbaud. This line rate is significantly higher than that supported by the SONET/SDH standard, which precludes the use of conventional (and legacy) SONET/SDH routing systems within the network medium 4.

In contrast, in a WAN configuration, the framer FIFO 36, scrambler 38 and converter 40 of the PMD 14 and medium 4 are operated at the standard SONET/SDH line rate of 9.95328 Gbaud, which means that conventional and legacy SONET/SDH routing systems may be used in the medium 4. However, in this configuration, the data rate (in the data link layer 8) is reduced to 9.29419Gb/s, which is somewhat lower than is normally expected based on the payload rate of conventional SONET/SDH signals. Additionally, the use of different line rates for LAN and WAN configuration implies that different devices must be used for the PMD layer 14a in each configuration, which leads to increased costs.

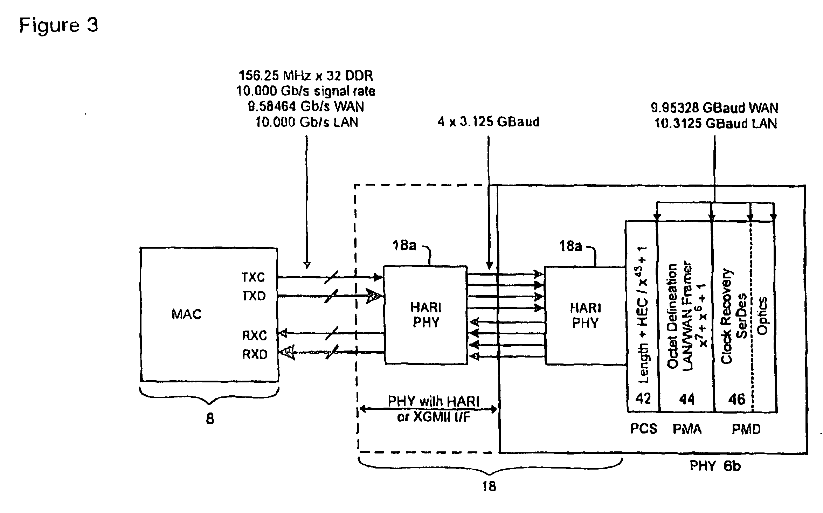

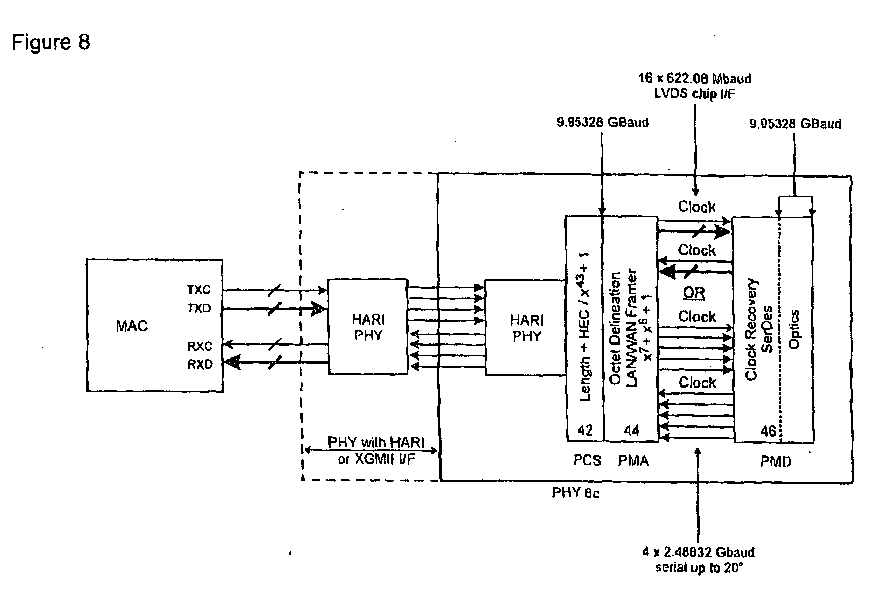

The present invention provides a unified PHY 6b which allows the PMD 14 and medium 4 to operate at the standard OC-192 line rate of 9.95328 Gbaud while providing a standard Ethernet data rate (in the data link layer 8) of 10Gb/s in LAN configurations and a SONET/SDH standard 9.58464Gb/s in WAN configurations. Features and operations of an exemplary embodiment of the present invention are described below with reference to Figs. 3 through 7. Alternative embodiments of the present invention will then be described with reference to Fig. 8.

Fig. 3 illustrates a unified PHY 6b in accordance with a first embodiment of the present invention. The unified PHY 6b is constructed using a layered model similar to the Ethernet reference model shown in Fig. 1. Thus the PHY 6b is composed of a physical coding sub-layer 42, a physical medium attachment sub-layer 44, and a physical medium dependent sub-layer 46. The physical coding sub-layer 42 is coupled to the data link layer 8 via a conventional medium independent interface 18, which may include one or more HARI interface devices 18a. Data transport through the medium independent interface 18 may be accomplished using a four lane data bus running at 3.125 Gbaud per lane and/or a thirty-two lane data bus running at 156.25MHz, to transfer an Ethernet data stream consisting of MAC frames and delivering a data rate of 9.58464Gb/s in WAN configurations and 10Gb/s in LAN configurations. The operations of the data link layer 8 and MII 18 are known in the art and therefore will not be described in detail herein. Similarly, the PMD sub-layer 46, which is coupled to the data transport medium 4 of the network, operates to perform electrical/optical signal conversion at an OC-192 line rate of 9.95328 Gbaud in a conventional manner, and thus will not be described in greater detail. The PCS 42 and the PMA sub-layer 44 respectively operate to perform MAC packet delineation, and insertion/extraction of MAC packets into and from synchronous containers, to enable transport through the packet switched data network medium 4. These layers also function to perform a double scrambling of data streams to improve system performance in a manner known in the art. Like the PMD sub-layer 46, both the PCS 42 and the PMA sub-layer 44 operate at a line rate of 9.95328 Gbaud.

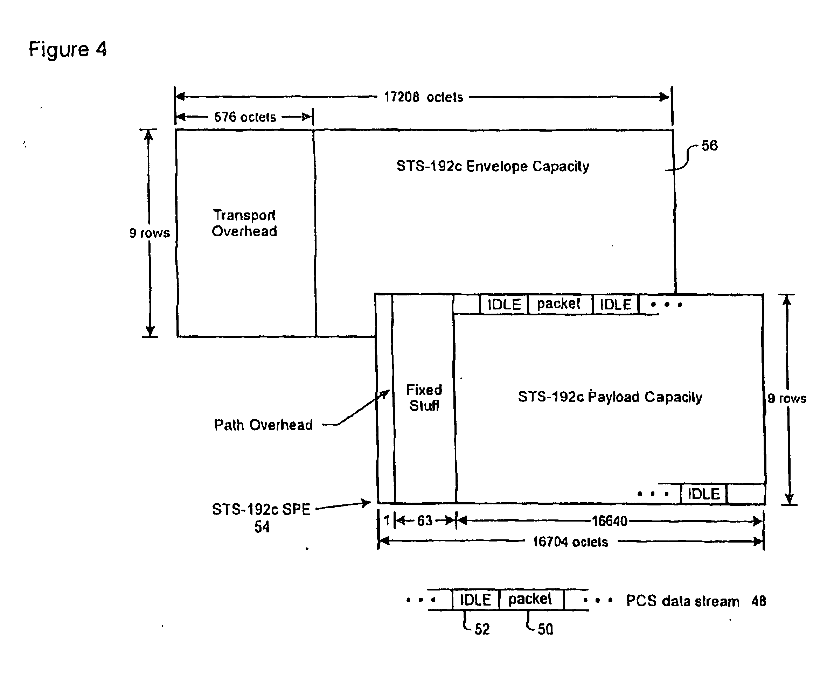

In accordance with the present invention, the manner in which Ethernet data streams are processed by the PCS 42, and the PMA sub-layer 44 is controlled based on the LAN or WAN configuration of the network. In particular, in a WAN configuration of the network, the PCS 42 performs signal scrambling in a conventional manner to produce a PCS data stream. The PMA sub-layer 44 then operates to map the PCS data stream into a conventional SONET synchronous payload envelope (SPE), which is inserted into a conventional synchronous container (e.g. an STS-192 frame) for transmission through the network medium 4 in a conventional manner. Conversely, in a LAN configuration of the network, the PCS 42 operates to produce the PCS data stream by compressing the Ethernet data stream, in addition to the conventional scrambling step. The PMA sub-layer 44 then maps this compressed PCS data stream into a stripped synchronous container for transport through the network medium 4. Selection of the mode of operation (e.g. for LAN or WAN network configurations) can be made by provisioning at the time of installation of the PHY 6b, or alternatively by means of an auto detection algorithm following power up of the PHY 6b. Operation of the PCS 42 and the PMA sub-layer 44 in each of these modes is described in greater detail below with reference to Figs. 4 through 7.

Fig. 4 illustrates the operation of the unified PHY 6a in a WAN configuration of the network. In this mode of operation, an outgoing Ethernet data steam is processed by the PCS 42 (e.g. x⁴³+1 scrambling) in a conventional manner to produce a PCS data stream 48 composed of a sequential series of MAC packets 50 separated by idle frames 52. The PCS data stream 48 is then forwarded to the PMA sub-layer 44 which performs a second scrambling of the PCS data stream 48 (e.g. with x⁷+x⁶+1) in a conventional manner, before mapping the scrambled data stream into a synchronous payload envelope (SPE) 54. The SPE 54 is then inserted in a synchronous container 56 (e.g. an STS-192 frame) for transport through the network medium 4. As may be seen in Fig. 4, the construction of the synchronous container 56 and the SPE 54 conform to the SONET/SDH standard so that the synchronous container 56 can be transported through the network medium 4 using conventional (and legacy) SONET/SDH technology and transmission facilities.

The processing of synchronous containers 56 received by the PHY 6b is substantially the reverse of that described above. Thus the PMA. sub-layer 44 processes each received synchronous container 56 to extract its payload data as a data stream. This data stream is then de-scrambled (e.g. using x⁷+x⁶+1) to recover the original PCS data stream 48, which is then passed to the PCS 42. The PCS 42 then processes the PCS data stream 48 by performing a second de-scrambling step (e.g. using x⁴³+1) and MAC packet delineation to generate a recovered Ethernet data stream which is passed to the data link layer 8 via the MII 18.

From the above description, it will be seen that for a WAN configuration of the network, the data throughput performance will be compatible with the payload race of the packet switched data network. In the case of a SONET/SDH network operating at an OC-192 line rate of 9.95328 Gbaud, the synchronous container 56 can conveniently be an STS-192 frame, and the payload rate of the associated STS-192 SPE 54 will translate into a data rate of 9.58464Gb/s. As may be seen in Fig. 7, this data rate is higher than the data rate of 9.29419Gb/s obtained by the prior art interface illustrated in Fig. 2 in WAN configurations.

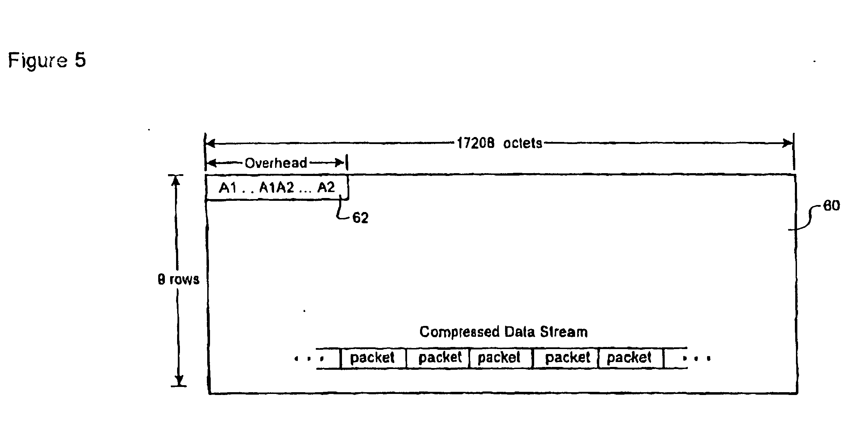

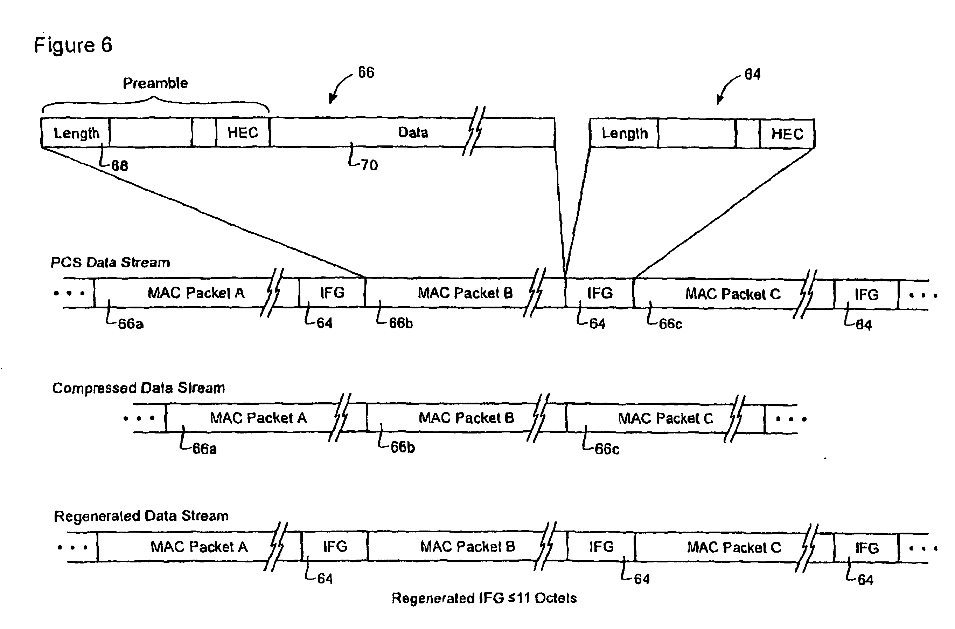

Figs 5 and 6 illustrate operation of the PHY 6b in LAN configurations of the network. Fig. 5 illustrates a synchronous container 60 usable for transportation of payload data through the network medium 4 in this mode of operation. The synchronous container 60 is formed as a stripped STS frame, in that it retains the row and column format of a conventional STS frame. However, most of the octets of the conventional transport overhead (TOH) have been removed. In the illustrated embodiment, only the A1 and A2 octets 62 of a conventional frame transport overhead are provided in the synchronous container 60. The A1 and A2 octets 62 are sufficient to enable routing of the synchronous container 60 through the network medium 4, as well as synchronization and octet delineation of received containers. Because all routing through the network medium 4 is point-to-point in LAN configurations, all of the payload data inserted into a synchronous container 60 is destined for a single destination node on the network. Routing of individual MAC packets to MAC addresses subtending the destination node is handled by data link layer 8 processing within the destination node. Accordingly, the path overhead and fixed stuff normally incorporated within an STS frame is not required. As a result, the use of a synchronous payload envelope is also not required for this mode of operation.

In order to maximize utilization of the synchronous container 60, the compressed data stream received from the physical coding sub-layer 42 is mapped directly into the synchronous container 60, starting at the first octet following the A1 and A2 octets 62, without first being inserted into a Synchronous Payload Envelope (SPE). As a result, space normally used for TOH and Path overhead (POH) within a conventional STS-192c frame is freed-up for carrying the compressed data stream.

A further increase in the data rate is obtained by compressing the Ethernet data stream within the PCS 42 (in addition to the conventional scrambling step) to generate a compressed PCS data stream. In general, this can be accomplished by processing the Ethernet data stream to eliminate the inter-frame gap 64 which normally separates successive MAC packets 66. As a result, MAC packets are inserted (following scrambling) into the synchronous container 60 back-to-back, with no dead space between the last bit of one packet 66a and a first bit of a successive packet 66b. A further compression of the PCS data stream can be accomplished by processing the data stream to eliminate idle MAC packets (i.e. MAC packets in which the data field is empty) so that each MAC packet 66 inserted into the synchronous container 60 includes payload data. Following insertion of the compressed PCS data stream into the synchronous container 60, the synchronous container 60 can be transported through the network medium 4 at a conventional OC-192 line rate of 9.95328 Gbaud. However, by maximizing utilization of the synchronous container 60, coupled with compression of the Ethernet data stream, a data rate of 10Gb/s (in the data link layer 8) can be achieved. As can be seen in Fig. 7, this data performance compares favorably with the prior art interface shown in Fig. 2, which required a line rate of 10.3125 Gbaud to obtain a data rate of 10Gb/s in LAN configurations.

Processing of received synchronous containers to obtain a recovered Ethernet data stream is substantially the reverse of that described above. Thus, upon reception of a synchronous container 60, the PMA layer 44 extracts the payload data from the synchronous container 60 as a serial data stream starting immediately following the A1 and A2 octets 62 of the container 60. The serial data stream is then de-scrambled (e.g. using x⁷+x⁶+1) and passed to the PCS 42 as a recovered compressed PCS data stream. Within the PCS 42 the compressed PCS data stream is decompressed by insertion of an inter-frame gap (of, for example, 11 octets) between successive MAC frames to produce a regenerated PCS data stream which can be de-scrambled a second time (e.g. using x⁴³+1) to produce the regenerated Ethernet data stream.

As shown in Fig. 6, compression and decompression of the PCS data stream can be accomplished by examining the length field 68 of the preamble of each MAC packet 66, which is conventionally used to specify the length of the data field 70 of the respective MAC packet 66. Thus idle packets and inter-frame gaps can be identified by a zero value in the length field 68, thereby allowing such idle packets and inter-frame gaps to be dropped from the PCS data stream. Once this has been accomplished, the compressed PCS data stream comprises a serial sequence of data-carrying MAC packets 66 lying back-to-back. This stream can be subsequently decompressed by again examining the length field 68 of the MAC packet preamble. Because the preamble is of a known predetermined length, the value contained in the length field 68 can be used as a pointer to the first bit of the next successive MAC packet 66. Thus as the regenerated compressed PCS data stream is received by the PCS 42, MAC packet delineation can be performed by examining the length field 68 of each successive MAC packet 66 to locate the first bit of the next packet 66. The data stream can then be further processed to insert an inter-frame gap of a predetermined length between successive packets 66. Preferably, the inserted inter-frame gap has a length of not more than eleven octets.

Fig. 8 shows an alternative embodiment of the interface of the present invention. In this case, the physical coding sub-layer 42 and physical medium attachment sub-layer 44 are implemented within a single device. The physical medium dependent sub-layer 46 is implemented as a second device, and a communications bus 70 is provided to interconnect these two devices. In one embodiment, the communications bus 70 comprises a multi-lane parallel bus running at a standard lower-speed SONET lint rate. In the illustrated embodiment, the communications bus 70 is implemented as a four-lane parallel bus running at a standard SONET STS-48 line rate of 2.48832 Gbaud. This bus 70 can be implemented using copper connections with a reach of up to twenty inches, without significantly degrading data transmission reliability. In use, the synchronous container 60 can be distributed (i.e. inverse multiplexed using, for example a conventional bit-slicing technique) across each of the lanes of the communications bus 70 by the physical medium attachment sub-layer 44 and transmitted to the physical medium dependent layer 46 for transport across the network medium 4. If desired, the multi-lane data transmission bus 70 can be propagated through the network medium 4 by transmitting the data streams in each of the lanes through the network medium 4 using respective different channels (e.g. wavelengths or fibers) running at a suitable conventional line rate (e.g. OC-48 in the case of the four-lane communications bus 70 illustrated in FIG. 8). In this case, the A1 and A2 octets of the synchronous container can be used to realign the respective data streams received through each of the channels at the destination node. In particular, by bit-slicing the synchronous container across multiple lanes, the respective data stream transmitted/received through each channel will each contain an A1/A2 octet transition, which will be at an identical position within each data stream. Thus a receiving physical medium dependent layer 46 can use the A1/A2 transition to bit-align the received data streams with each other using techniques known in the art, such as, for example, by buffering each data stream in a respective elastic store (not shown) and adjusting a read pointer based on the detected location of the A1/A2 transition within the respective data stream. The thus bit-wise aligned data streams can then be multiplexed (e.g. using a conventional bit-interleaving technique) to recover the original synchronous container.

In an alternative embodiment, a conventional 16 bit low voltage differential signal (LVDS) chip interface can be used between the physical medium dependent layer 46 and the physical medium attachment layer 44.

Based on the foregoing, it will be seen that the present invention provides a technique for transmitting high speed Ethernet data streams across a packet switched physical network medium 4. The present invention utilizes a common physical medium dependent interface 46 that can be used independently of the LAN/WAN configuration of the network. Additionally, data rates compatible with conventional SONET payload rates are obtained in a WAN configuration, while a data rate of 10Gb/s is obtained in the LAN configuration.

The embodiment (s) of the invention described above is(are) intended to be exemplary only. The scope of the invention is therefore intended to be limited solely by the scope of the appended claims.

## Claims

1. A method of transporting a high speed Ethernet data stream comprising a sequential series of media access control, MAC, frames (66) and having a data rate of 10Gb/s across a synchronous packet switched network fabric (4) having a line rate of 9.953280 Gbaud, wherein
a) the high-speed Ethernet data stream is compressed, at a sending interface (6b), to produce a compressed data stream;
**CHARACTERIZED IN THAT**
b) the compressed data stream is mapped to a synchronous container (60) having a line/column frame format conforming to a conventional synchronous optical network, SONET, frame format and a stripped transport overhead, TOH, wherein the stripped TOH comprises only A1 and A2 octets of a conventional SONET frame TOH; and
c) the synchronous container (60) is launched across the network fabric toward a receiving interface.

2. A method as claimed in claim 1, **CHARACTERIZED IN THAT** the frame format of the synchronous container (60) conforms to a SONET synchronous transport signal-level 192, STS-192C, frame format.

3. A method as claimed in claim 1, **CHARACTERIZED IN THAT** the stripped TOH comprises a predetermined number of each of the A1 and A2 octets.

4. A method as claimed in claim 3, **CHARACTERIZED IN THAT** the predetermined number is 24 or less.

5. A method as claimed in claim 1, **CHARACTERIZED IN THAT** the step of compressing the Ethernet data stream comprises a step of removing an inter-frame gap, IFG, (64) between successive MAC frames (66).

6. A method as claimed in claim 5, **CHARACTERIZED IN THAT** the step of compressing the Ethernet data stream further comprises a step of removing idle MAC frames from the Ethernet data stream.

7. A method as claimed in claim 1, **CHARACTERIZED IN THAT** the step of mapping the compressed data stream to the synchronous container comprises adding successive frames of the compressed data stream directly to the synchronous optical network SONET frame.

8. A method as claimed in claim 7, **CHARACTERIZED IN THAT** successive MAC frames of the compressed data stream are added to the synchronous container (60) starting immediately following the stripped TOH.

9. A method as claimed in claim 1, **CHARACTERIZED IN THAT** the step of launching the synchronous container comprises steps of:
a) inverse multiplexing the synchronous container into a plurality of data streams; and
b) launching each of the data streams into a respective channel of the network fabric.

10. A method as claimed in claim 1, **CHARACTERIZED IN THAT**:
a) a synchronous container is received from the sending interface;
b) the compressed data stream is extracted from the synchronous container; and
c) the compressed data stream is decompressed to recover the original Ethernet data stream.

11. A method as claimed in claim 10, **CHARACTERIZED IN THAT** the synchronous container is inverse multiplexed across a plurality of channels of the network fabric, and the step of receiving the synchronous container comprises steps of:
a) receiving a respective data stream through each one of the plurality of channels;
b) aligning each of the received data streams; and
c) multiplexing the aligned data streams to recover the synchronous container.

12. A method as claimed in claim 10, **CHARACTERIZED IN THAT** the step of extracting the compressed data stream from the synchronous container comprises the steps of:
a) synchronizing a read clock with the synchronous container; and
b) reading successive MAC frames of the compressed data stream from the synchronous container starting immediately following a transport overhead TOH, of the synchronous container.

13. A method as claimed in claim 12, **CHARACTERIZED IN THAT** the step of synchronizing a read clock with the synchronous container comprises detecting a transition between A1 and A2 octets of the TOH.

14. A method as claimed in claim 10, **CHARACTERIZED IN THAT** the step of decompressing the compressed data stream comprises a step of inserting an inter-frame gap IFG, between successive MAC frames.

15. A method as claimed in claim 14, **CHARACTERIZED IN THAT** the step of inserting an IFG between successive MAC frames comprises the steps of:
a) monitoring a preamble portion of a first MAC frame;
b) reading a length of a data portion of the first MAC frame from the monitored preamble portion, to identify a trailing byte of the first MAC frame; and
c) inserting an idle MAC frame into the compressed stream immediately following the identified trailing byte.

16. A method of interfacing a local area network "LAN" having a 10Gb/s data rate and a synchronous packet switched physical network fabric having a line rate of 9.953280 Gbaud, comprising using a transport method as claimed in any preceding claim.

17. An interface (6b) for coupling a local area network, LAN, having a 10Gb/s data rate to a synchronous packet switched physical network fabric (4) having a line rate of 9.953280 Gbaud, wherein the interface comprises:
a) means for receiving an Ethernet data stream comprising a sequential series of media access control, MAC, frames (66); and
b) means for compressing the Ethernet data stream;
**CHARACTERIZED IN THAT** the interface further comprises:
c) means for mapping the compressed Ethernet data stream to a synchronous container (60) of the synchronous packet switched physical network fabric, the synchronous container having a line/column frame format conforming to a conventional synchronous optical network, SONET, frame format and a stripped transport overhead TOH, wherein the stripped TOH comprises only A1 and A2 octets of a conventional SONET frame TOH.

18. An interface as claimed in claim 17, **CHARACTERIZED IN THAT** the frame format of the synchronous container (60) conforms to a SONET synchronous transport signal-level 192, STS-192C, frame format.

19. An interface as claimed in claim 17, **CHARACTERIZED IN THAT** the stripped TOH comprises a predetermined number of each of the A1 and A2 octets.

20. An interface as claimed in claim 19, **CHARACTERIZED IN THAT** the predetermined number is 24 or less.

21. An interface as claimed in claim 17, **CHARACTERIZED IN THAT** the means for compressing the Ethernet data stream comprises means for removing an inter-frame gap, IFG, (64) between successive MAC frames.

22. An interface as claimed in claim 21, **CHARACTERIZED IN THAT** the means for compressing the Ethernet data stream further comprises means for removing idle MAC frames from the Ethernet data stream.

23. An interface as claimed in claim 17, **CHARACTERIZED IN THAT** the means for mapping the compressed data stream to the synchronous container comprises means for adding successive MAC frames of the compressed data stream directly to the synchronous container.

24. An interface as claimed in claim 23, **CHARACTERIZED IN THAT** successive MAC frames of the compressed data stream are added to the synchronous container starting immediately following the stripped TOH.

25. An interface as claimed in claim 17, further **CHARACTERIZED BY**:
a) means for receiving a synchronous container encapsulating the compressed Ethernet data stream;
b) means for extracting the compressed Ethernet data stream from the received synchronous container; and
c) means for decompressing the compressed Ethernet data stream.

26. An interface as claimed in claim 25, **CHARACTERIZED IN THAT** the means for extracting the compressed Ethernet data stream from the received synchronous container comprises:
a) means for synchronizing a read clock with the received synchronous container; and
b) means for reading successive MAC frames of the compressed Ethernet data stream from the received synchronous container starting immediately following a transport overhead TOH, of the received synchronous container.

27. An interface as claimed in claim 26, **CHARACTERIZED IN THAT** the means for synchronizing a read clock with the received synchronous container comprises means for detecting a transition between A1 and A2 octets of the TOH.

28. An interface as claimed in claim 25, **CHARACTERIZED IN THAT** the means for decompressing the compressed Ethernet data stream comprises means for inserting an Inter-frame gap IFG, between successive MAC frames.

29. An interface as claimed in claim 28, **CHARACTERIZED IN THAT** the means for inserting an IFG between successive MAC frames comprises:
a) means for monitoring a preamble portion of a first MAC frame;
b) means for reading a length of a data portion of the first MAC frame from the monitored preamble portion, to identify a trailing byte of the first MAC frame; and
c) means for inserting an idle MAC frame into the compressed Ethernet data stream immediately following the identified trailing byte.

## Patentansprüche

1. Verfahren zum Transport eines Hochgeschwindigkeits-Ethemet-Datenstroms, der eine sequentielle Serie von Medienzugangs-Kontroll-, MAC-, Rahmen (66) umfasst und eine Datenrate von 10Gb/s hat, über eine synchrone paketvermittelte Netzwerk-Struktur (4), die eine Leitungsrate von 9,953280 Gbaud hat, wobei
a) der Hochgeschwindigkeits-Ethernet-Datenstrom an einer sendenden Schnittstelle (6b) komprimiert wird, um einen komprimierten Datenstrom zu erzeugen;
**dadurch gekennzeichnet, dass**:
b) der komprimierte Datenstrom auf einen synchronen Container (60) umgesetzt wird, der ein Zeilen-/Spalten-Rahmenformat, das einem konventionellen synchronen optischen Netzwerk-Rahmen-Format entspricht, und eine verkürzte Transport-Zusatzdaten-Information, TOH, aufweist, wobei verkürzte TOH lediglich A1- und A2-Oktette eines konventionellen SONET-Rahmen-TOH umfasst; und
c) der synchrone Container (60) über die Netzwerk-Struktur in Richtung auf eine empfangende Schnittstelle ausgesandt wird.

2. Verfahren nach Anspruch 1, **dadurch gekennzeichnet, dass** das Rahmen-Format des synchronen Containers (60) einem Rahmen-Format eines synchronen SONET-Transportsignal der Ebene 192, STS-192C, entspricht.

3. Verfahren nach Anspruch 1, **dadurch gekennzeichnet, dass** die verkürzten TOH eine vorgegebene Anzahl von jedem der A1- und A2-Oktette umfassen.

4. Verfahren nach Anspruch 3, **dadurch gekennzeichnet, dass** die vorgegebene Anzahl gleich 24 oder weniger ist.

5. Verfahren nach Anspruch 1, **dadurch gekennzeichnet, dass** der Schritt des Komprimierens des Ethemet-Datenstroms den Schritt der Beseitigung einer Zwischen-Rahmen-Lücke, IFG, (64) zwischen aufeinander folgenden MAC-Rahmen (66) umfasst.

6. Verfahren nach Anspruch 5, **dadurch gekennzeichnet, dass** der Schritt des Komprimierens des Ethernet-Datenstroms weiterhin den Schritt der Beseitigung von Leer-MAC-Rahmen aus dem Ethernet-Datenstrom umfasst.

7. Verfahren nach Anspruch 1, **dadurch gekennzeichnet, dass** der Schritt der Umsetzung des komprimierten Datenstroms auf den synchronen Container die Hinzufügung aufeinander folgender Rahmen des komprimierten Datenstroms direkt zu den synchronen optischen Netzwerk-, SONET, Rahmen umfasst.

8. Verfahren nach Anspruch 7, **dadurch gekennzeichnet, dass** aufeinander folgende MAC-Rahmen des komprimierten Datenstrom zu dem synchronen Container (60) beginnend unmittelbar nach der verkürzten TOH hinzugefügt werden.

9. Verfahren nach Anspruch 1, **dadurch gekennzeichnet, dass** der Schritt der Aussendung des synchronen Containers die folgenden Schritte umfasst:
a) inverses Multiplexieren des synchronen Containers in eine Anzahl von Datenströmen; und
b) Absenden jedes der Datenströme in einen jeweiligen Kanal der Netzwerk-Struktur.

10. Verfahren nach Anspruch 1, **dadurch gekennzeichnet, dass**:
a) ein synchroner Container von der sendenden Schnittstelle empfangen wird;
b) der komprimierte Datenstrom aus dem synchronen Container abgeleitet wird; und
c) der komprimierte Datenstrom dekomprimiert wird, um den ursprünglichen Ethernet-Datenstrom wieder herzustellen.

11. Verfahren nach Anspruch 10, **dadurch gekennzeichnet, dass** der synchrone Container über eine Anzahl von Kanälen der Netzwerk-Struktur hinweg invers multiplexiert wird, und dass der Schritt des Empfangs des synchronen Containers die folgenden Schritte umfasst:
a) Empfangen eines jeweiligen Datenstroms für jeden einen der Anzahl von Kanälen;
b) Ausrichten jedes der empfangenen Datenströme; und
c) Multiplexieren der ausgerichteten Datenströme zur Wiederherstellung des synchronen Containers.

12. Verfahren nach Anspruch 10, **dadurch gekennzeichnet, dass** der Schritt des Ableitens des komprimierten Datenstroms aus dem synchronen Container die folgenden Schritte umfasst:
a) Synchronisierung eines Lese-Taktes mit dem synchronen Container; und
b) Lesen aufeinander folgender MAC-Rahmen des komprimierten Datenstroms aus dem synchronen Container beginnend unmittelbar nachfolgend einer Transport-Zusatzdaten-Information TOH des synchronen Containers.

13. Verfahren nach Anspruch 12, **dadurch gekennzeichnet, dass** der Schritt des Synchronisierens eines Lese-Taktes mit dem synchronen Container die Feststellung eines Überganges zwischen A1- und A2-Oktetten der TOH umfasst.

14. Verfahren nach Anspruch 10, **dadurch gekennzeichnet, dass** der Schritt des Dekomprimierens des komprimierten Datenstroms einen Schritt des Einfügens einer Zwischen-Rahmen-Lücke IFG zwischen aufeinander folgenden MAC-Rahmen umfasst.

15. Verfahren nach Anspruch 14, **dadurch gekennzeichnet, dass** der Schritt des Einfügens einer IFG zwischen aufeinander folgenden MAC-Rahmen die folgenden Schritte umfasst:
a) Überwachen eines Präambel-Abschnittes eines ersten MAC-Rahmens;
b) Lesen einer Länge des Datenteils des ersten MAC-Rahmens aus dem überwachten Präambel-Teil zur Identifikation eines nacheilenden Byte des ersten MAC-Rahmens; und
c) Einfügen eines leeren MAC-Rahmens in dem komprimierten Datenstrom unmittelbar nachfolgend zu den identifizierten nacheilenden Byte.

16. Verfahren zur Schnittstellenverbindung eines lokalen Netzwerkes "LAN" mit einer Datenrate von 10Gb/s und einer synchronen paketvermittelten physikalischen Netzwerk-Struktur mit einer Leitungsrate von 9,953280 Gbaud, das die Verwendung eines Transportverfahrens nach einem der vorhergehenden Ansprüche umfasst.

17. Schnittstelle (6b) zum Koppeln eines lokalen Netzwerkes, LAN, mit einer Datenrate von 10Gb/s mit einer synchronen paketvermittelten physikalischen Netzwerk-Struktur (4), die eine Leitungsrate von 9,953280 Gbaud hat, wobei die Schnittstelle Folgendes umfasst:
a) Einrichtungen zum Empfang eines Ethemet-Datenstroms, der eine sequentielle Serie von Medien-Zugangskontroll-, MAC-, Rahmen (66) umfasst, und
b) Einrichtungen zum Komprimieren des Ethernet-Datenstroms;
**dadurch gekennzeichnet, dass** die Schnittstelle weiterhin Folgendes umfasst:
c) Einrichtungen zum Umsetzen des komprimierten Ethernet-Datenstroms auf einen synchronen Container (60) der synchronen paketvermittelten physikalischen Netzwerk-Struktur, wobei der synchrone Container ein Zeilen/Spalten-Rahmenformat, das einem konventionellen synchronen optischen Netzwerk-, SONET-, Rahmenformat entspricht, und eine abgekürzte Transport-Zusatzdaten-Information, TOH, aufweist, wobei die verkürzte TOH lediglich A1- und A2-Oktette eines konventionellen SONET-Rahmen-TOH umfasst.

18. Schnittstelle nach Anspruch 17, **dadurch gekennzeichnet, dass** das Rahmenformat des synchronen Containers (60) einem Rahmenformat eines synchronen Transportsignals, SONET, der Ebene 192, STS-192C, entspricht.

19. Schnittstelle nach Anspruch 17, **dadurch gekennzeichnet, dass** die verkürzte TOH eine vorgegebene Anzahl von jeweiligen der A1- und A2-Oktette umfasst.

20. Schnittstelle nach Anspruch 19, **dadurch gekennzeichnet, dass** die vorgegebene Anzahl gleich 24 oder weniger ist.

21. Schnittstelle nach Anspruch 17, **dadurch gekennzeichnet, dass** die Einrichtungen zum Komprimieren des Ethernet-Datenstroms Einrichtungen zur Entfernung einer Zwischen-Rahmen-Lücke, IFG, (64) zwischen aufeinander folgenden MAC-Rahmen umfasst.

22. Schnittstelle nach Anspruch 21, **dadurch gekennzeichnet, dass** die Einrichtung zum Komprimieren des Ethernet-Datenstrom weiterhin eine Einrichtung zur Beseitigung von Leer-MAC-Rahmen aus dem Ethernet-Datenstrom umfasst.

23. Schnittstelle nach Anspruch 17, **dadurch gekennzeichnet, dass** die Einrichtung zur Umsetzung des komprimierten Datenstroms auf den synchronen Container eine Einrichtung zur Hinzufügung aufeinander folgender MAC-Rahmen des komprimierten Datenstroms direkt zu dem synchronen Container umfasst.

24. Schnittstelle nach Anspruch 23, **dadurch gekennzeichnet, dass** aufeinander folgende MAC-Rahmen des komprimierten Datenstroms dem synchronen Container beginnend unmittelbar nachfolgend zu der verkürzten TOH hinzugefügt werden.

25. Schnittstelle nach Anspruch 17, die weiterhin durch folgendes **gekennzeichnet** ist:
a) Einrichtungen zum Empfang eines synchronen Containers, der den komprimierten Ethernet-Datenstrom einkapselt;
b) Einrichtungen zur Ableitung des komprimierten Ethernet-Datenstroms aus dem empfangenen synchronen Container; und
c) Einrichtungen zum Dekomprimieren des komprimierten Ethemet-Datenstroms.

26. Schnittstelle nach Anspruch 25, **dadurch gekennzeichnet, dass** die Einrichtungen zum Ableiten des komprimierten Ethernet-Datenstrom aus dem empfangenen synchronen Container Folgendes umfassen:
a) Einrichtungen zum Synchronisieren eines Lese-Taktes mit dem empfangenen synchronen Container; und
b) Einrichtungen zum Lesen aufeinander folgender MAC-Rahmen des komprimierten Ethernet-Datenstroms aus dem empfangenen synchronen Container beginnend unmittelbar nachfolgend zu einer Transport-Zusatzdaten-Information TOH des empfangenen synchronen Containers.

27. Schnittstelle nach Anspruch 26, **dadurch gekennzeichnet, dass** die Einrichtungen zum Synchronisieren eines Lese-Taktes mit dem empfangenen synchronen Container Einrichtungen zur Feststellung eines Überganges zwischen A1- und A2-Oktetten der TOH umfassen.

28. Schnittstelle nach Anspruch 25. **dadurch gekennzeichnet, dass** die Einrichtungen zum Dekomprimieren des komprimierten Ethernet-Datenstroms Einrichtungen zum Einfügen einer Zwischen-Rahmen-Lücke IFG zwischen aufeinander folgenden MAC-Rahmen umfassen.

29. Schnittstelle nach Anspruch 28, **dadurch gekennzeichnet, dass** die Einrichtungen zum Einfügen einer IFG zwischen aufeinander folgende MAC-Rahmen Folgendes umfassen:
a) Einrichtungen zur Überwachung eines Präambel-Teils eines ersten MAC-Rahmens;
b) Einrichtungen zum Lesen der Länge eines Datenteils des ersten MAC-Rahmen aus dem überwachten Präambel-Teil zur Identifikation eines nacheilenden Bytes des ersten MAC-Rahmens; und
c) Einrichtungen zum Einfügen eines Leer-MAC-Rahmens in den komprimierten Ethernet-Datenstrom unmittelbar nachfolgend zu dem identifizierten nacheilenden Byte.

## Revendications

1. Procédé de transport d'un flux de données Ethernet à haut-débit comprenant une série séquentielle de trames de commande d'accès au support physique (MAC) (66) et ayant un débit de données de 10 Gb/s à travers une matrice de commutation d'un réseau à commutation de paquets synchrone (4) ayant un débit en ligne de 9,953280 Gbaud, dans lequel
a) le flux de données Ethernet à haut-débit est comprimé, au niveau d'une interface d'émission (6b), pour produire un flux de données comprimé ;
**caractérisé en ce que**
b) le flux de données comprimé est mappé à un conteneur synchrone (60) ayant un format de trame ligne/colonne se conformant à un format de trame du réseau optique synchrone conventionnel, SONET, et un surdébit de transport dépouillé, TOH, dans lequel le surdébit dépouillé TOH ne comprend que les octets A1 et A2 d'un surdébit TOH de trame du réseau SONET conventionnel ; et
c) le conteneur synchrone (60) est lancé dans la matrice de commutation de réseau en direction d'une interface de réception.

2. Procédé selon la selon la revendication 1, **caractérisé en ce que** le format de trame du conteneur synchrone (60) est conforme à un format de trame de niveau de signal 192 de transport synchrone (STS-192C) du réseau SONET.

3. Procédé selon la revendication 1, **caractérisé en ce que** le surdébit de transport dépouillé TOH comprend un nombre prédéterminé de chacun des octets A1 et A2.

4. Procédé selon la revendication 3, **caractérisé en ce que** le nombre prédéterminé est égal ou inférieur à 24.

5. Procédé selon la revendication 1, **caractérisé en ce que** l'étape de compression du flux de données Ethernet comprend une étape de suppression d'un espace inter-trame, IFG, (64) entre des trames MAC successives (66).

6. Procédé selon la revendication 5, **caractérisé en ce que** l'étape de compression du flux de données Ethernet comprend en outre une étape de suppression des trames MAC inactives du flux de données Ethernet.

7. Procédé selon la revendication 1, **caractérisé en ce que** l'étape de mappage du flux de données comprimé au conteneur synchrone comprend l'ajout de trames successives du flux de données comprimé directement à la trame de réseau optique synchrone SONET.

8. Procédé selon la revendication 7, **caractérisé en ce que** des trames MAC successives du flux de données comprimé sont ajoutées au conteneur synchrone (60) démarrant immédiatement à la suite du surdébit dépouillé TOH.

9. Procédé selon la revendication 1, **caractérisé en ce que** l'étape de lancement du conteneur synchrone comprend les étapes consistant à :
a) effectuer un multiplexage inverse du conteneur synchrone en une pluralité de flux de données ; et
b) lancer chacun des flux de données dans un canal respectif de la matrice de commutation de réseau.

10. Procédé selon la revendication 1, **caractérisé en ce que** :
a) un conteneur synchrone est reçu de l'interface d'émission ;
b) le flux de données comprimé est extrait du conteneur synchrone ; et
c) le flux de données comprimé est décomprimé afin de récupérer le flux de données Ethernet original.

11. Procédé selon la revendication 10, **caractérisé en ce que** le conteneur synchrone subit un multiplexage inverse à travers une pluralité de canaux de la matrice de commutation de réseau, et **en ce que** l'étape de réception du conteneur synchrone comprend les étapes consistant à :
a) recevoir un flux de données respectif par le biais de chaque canal de la pluralité de canaux ;
b) aligner chacun des flux de données reçus ; et
c) multiplexer les flux de données alignés afin de récupérer le conteneur synchrone.

12. Procédé selon la revendication 10, **caractérisé en ce que** l'étape d'extraction du flux de données comprimé à partir du conteneur synchrone comprend les étapes consistant à :
a) synchroniser une horloge de lecture avec le conteneur synchrone ; et
b) lire des trames MAC successives du flux de données comprimé à partir du conteneur synchrone démarrant immédiatement à la suite d'un surdébit de transport TOH du conteneur synchrone.

13. Procédé selon la revendication 12, **caractérisé en ce que** l'étape de synchronisation d'une horloge de lecture avec le conteneur synchrone comprend la détection d'une transition entre des octets A1 et A2 du surdébit de transport TOH.

14. Procédé selon la revendication 10, **caractérisé en ce que** l'étape de décompression du flux de données comprimé comprend une étape d'insertion d'un espace inter-trame IFG entre des trames MAC successives.

15. Procédé selon la revendication 14, **caractérisé en ce que** l'étape d'insertion d'un espace IFG entre des trames MAC successives comprend les étapes consistant à :
a) surveiller une partie préambulaire d'une première trame MAC ;
b) lire une longueur d'une partie des données de la première trame MAC provenant de la partie préambulaire surveillée afin d'identifier un octet de traîne de la première trame MAC ; et
c) insérer une trame MAC inactive dans le flux comprimé immédiatement à la suite de l'octet de traîne identifié.

16. Procédé d'interfaçage d'un réseau local « LAN » ayant un débit de données de 10 Gb/s et une matrice de commutation de réseau physique à commutation de paquets synchrone ayant un débit en ligne de 9,953280 Gbaud, comprenant l'utilisation d'un procédé de transport selon une quelconque des revendications précédentes.

17. Interface (6b) destinée à coupler un réseau local, LAN, ayant un débit de données de 10 Gb/s à une matrice de commutation de réseau physique à commutation de paquets synchrone (4) ayant un débit en ligne de 9,953280 Gbaud, dans laquelle l'interface comprend :
a) des moyens de réception d'un flux de données Ethernet comprenant une série séquentielle de trames de commande d'accès au support physique, MAC, (66) ; et
b) des moyens de compression du flux de données Ethernet ;
**caractérisée en ce que** l'interface comprend en outre :
c) des moyens pour mapper le flux de données comprimé Ethernet à un conteneur synchrone (60) de la matrice de commutation du réseau physique à commutation de paquets synchrone, le conteneur synchrone ayant un format de trame ligne/colonne se conformant à un format de trame conventionnel du réseau optique synchrone, SONET, et un surdébit de transport dépouillé, TOH, dans lequel le surdébit dépouillé TOH ne comprend que les octets A1 et A2 d'un surdébit TOH de trame conventionnelle du réseau SONET.

18. Interface selon la revendication 17, **caractérisée en ce que** le format de trame du conteneur synchrone (60) est conforme à un format de trame de niveau de signal 192 de transport synchrone (STS-192C) du réseau SONET.

19. Interface selon la revendication 17, **caractérisée en ce que** le surdébit TOH comprend un nombre prédéterminé de chacun des octets A1 et A2.

20. Interface selon la revendication 19, **caractérisée en ce que** le nombre prédéterminé est égal ou inférieur à 24.

21. Interface selon la revendication 17, **caractérisée en ce que** les moyens de compression du flux de données Ethernet comprennent des moyens de suppression d'un espace inter-trame, IFG, (64) entre des trames MAC successives.

22. Interface selon la revendication 21, **caractérisée en ce que** les moyens de compression du flux de données Ethernet comprennent en outre des moyens de suppression de trames MAC inactives du flux de données Ethernet.

23. Interface selon la revendication 17, **caractérisée en ce que** les moyens de mappage du flux de données comprimé au conteneur synchrone comprennent des moyens d'ajout de trames MAC successives du flux de données comprimé directement au conteneur synchrone.

24. Interface selon la revendication 23, **caractérisée en ce que** des trames MAC successives du flux de données comprimé sont ajoutées au conteneur synchrone démarrant immédiatement à la suite du surdébit dépouillé TOH.

25. Interface selon la revendication 17, **caractérisée en outre par** :
a) des moyens de réception d'un conteneur synchrone encapsulant le flux de données comprimé Ethernet ;
b) des moyens d'extraction du flux de données comprimé Ethernet provenant du conteneur synchrone reçu ; et
c) des moyens de décompression du flux de données comprimé Ethernet.

26. Interface selon la revendication 25, **caractérisée en ce que** les moyens d'extraction du flux de données Ethernet comprimé provenant du conteneur synchrone reçu comprennent :
a) des moyens de synchronisation d'une horloge de lecture avec le conteneur synchrone reçu ; et
b) des moyens de lecture de trames MAC successives du flux de données comprimé Ethernet provenant du conteneur synchrone reçu démarrant immédiatement à la suite d'un surdébit de transport TOH du conteneur synchrone reçu.

27. Interface selon la revendication 26, **caractérisée en ce que** les moyens de synchronisation d'une horloge de lecture avec le conteneur synchrone reçu comprennent des moyens de détection d'une transition entre des octets A1 et A2 du surdébit de transport TOH.

28. Interface selon la revendication 25, **caractérisée en ce que** les moyens de décompression du flux de données comprimé Ethernet comprennent des moyens d'insertion d'un espace inter-trame IFG entre des trames MAC successives.

29. Interface selon la revendication 28, **caractérisée en ce que** les moyens d'insertion d'un espace inter-trame IFG entre des trames MAC successives comprennent :
a) des moyens de surveillance d'une partie préambulaire d'une première trame MAC ;
b) des moyens de lecture d'une longueur d'une partie des données de la première trame MAC à partir de la partie préambulaire surveillée afin d'identifier un octet de traîne de la première trame MAC ; et
c) des moyens d'insertion d'une trame MAC inactive dans le flux de données comprimé Ethernet immédiatement à la suite de l'octet de traîne identifié.
